# FASCICULE DE BREVET EUROPEEN

(11) **EP 2 080 153 B1**
(45) Date de publication et mention de la délivrance du brevet: **27.11.2019**
(21) Numéro de dépôt: 07858577.5
(22) Date de dépôt: 15.10.2007
(51) Int. Cl.: G06K 9/20, G02B 5/28

(54) **INSTALLATION DE DÉTECTION DE L'UNICITÉ D'UNE PERSONNE DANS UN VOLUME**
GERÄT ZUR DETEKTION DER EINZIGEN ANWESENHEIT EINER PERSON IN EINER MENGE
EQUIPMENT FOR DETECTING THE UNIQUENESS OF A PERSON IN A VOLUME

(30) Priorité: 16.10.2006 FR 0609050
(43) Date de publication de la demande: 22.07.2009
(73) Titulaire: Idemia Identity & Security France, 92400 Courbevoie (FR)
(72) Inventeur: BERNARD, Emmanuel, 75015 Paris (FR); FOURRE, Joël-Yann, 75015 Paris (FR); MONTEILLIET, Gilles, 75015 Paris (FR)
(74) Mandataire: Plasseraud IP
(86) Numéro de dépôt international: PCT/FR2007/052150
(87) Numéro de publication internationale: WO 2008/047033

(56) Documents cités:
- WO-A-2007/087931
- DE-A1- 3 525 265
- DE-A1- 10 026 710
- DE-A1- 19 644 278
- FR-A1- 2 737 560
- US-A- 3 718 751
- US-A1- 2001 022 550
- MR RESISTOR: "LED CATALOGUE TRADE PRICE LIST 2005"[Online] 2005, XP007904289 London Extrait de l'Internet: URL:http://www.mr-resistor.co.uk/uploads/L ED%20Price%20List.pdf> [extrait le 2008-03-12]
- KORCHERGIN, VLADIMIR: "Omnidirectional Optical Filters" 2003, KLUWER ACADEMIC PUBLISHERS , NORWELL, MASSACHUSETTS, USA , XP002428364 page 86, ligne 19 - page 87, ligne 4

## Description

La présente invention porte sur une installation de détection de l'unicité d'une personne dans un volume fermé donné permettant de vérifier qu'une seule personne ne passe à la fois dans un sas par reconnaissance optique du contour de la personne.

Pour ce faire, afin de permettre cette détection, il est prévu une vitre de protection dans ce sas derrière laquelle est placée un dispositif de visualisation du type caméra vidéo, lui-même connecté à des moyens logiciel apte à reconnaître le contour d'une personne et à bloquer ce sas dans le cas de la détection de plus d'une personne dans ce sas. De manière préférentielle, la vitre de protection est une vitre de protection fumée absorbant la lumière visible.

De manière à permettre une bonne lecture des images visualisées et/ou enregistrées par la caméra vidéo, il est prévu des moyens d'éclairage au voisinage du dispositif de visualisation d'images et dirigés vers la zone visualisée. Afin d'avoir un éclairage coaxial puissant avec l'axe optique du dispositif de visualisation d'images, des LEDs (préférentiellement entre trois et huit LEDs) possédant un large champ d'au moins 110° sont positionnées autour de l'objectif du dispositif de visualisation d'images.

Toutefois, du fait de la présence de ces moyens d'éclairage puissants derrière la vitre de protection, du fait que l'objectif du dispositif de visualisation d'images est placé à quelques centimètres de la vitre de protection (préférentiellement au moins 1 cm, et de manière encore plus préférentielle 2 cm) pour permettre son déplacement par rapport à la vitre de protection et du fait que la zone visualisée est à grande distance, c'est-à-dire à plus d'un mètre (préférentiellement à 1m20), des reflets de l'éclairage infrarouge apparaissent sur la vitre, reflets qui peuvent être dans le champ de la caméra et donc réduire la bonne lisibilité des images visualisées par la caméra vidéo.

Ces reflets sont très lumineux du fait de la faible distance entre la vitre de protection et la caméra vidéo et de la grande superficie de la vitre de protection.

Ces reflets résultent alors en un phénomène dit de « blooming », c'est-à-dire en un grossissement du point lumineux sur l'image visualisée provoquant une perte apparente de la mise au point des plages brillantes de l'image.

Il devient alors difficile de détecter automatiquement avec certitude l'unicité d'une personne à l'aide des moyens logiciel et des erreurs peuvent alors apparaître (détection de plusieurs personnes alors qu'une seule personne est dans le sas ou alors non détection d'une personne effectivement présente).

Une solution pour réduire ces reflets consisterait à traiter optiquement la vitre de protection pour que celle-ci soit anti-reflets.

Toutefois, quand la vitre de protection à traiter est de dimension trop grande ou quand elle a une fonction mécanique, par exemple du type vitre blindée, alors cette solution serait trop onéreuse à mettre en oeuvre.

Il est décrit dans le document US2001/0022550 un dispositif de surveillance pour véhicules comprenant un logement avec une caméra placée derrière un miroir présentant une couche réfléchissante dans la gamme spectrale visible de la lumière. Le dispositif permet d'identifier le conducteur, son état physique, les passagers ainsi que leurs positions et commander les airbags. Toutefois, selon ce mode de réalisation, l'objectif de la caméra est accolé contre le miroir et il n'y a alors très peu de reflets générés par les LEDs sur la vitre de protection, contrairement à l'installation selon l'invention. Par ailleurs, l'éclairage n'a pas besoin d'être intense et d'être proche de la caméra. Il peut ainsi être constaté que les éclairages sont constitués de nombreuses sources de faible puissance, ce qui fait que chaque reflet est plus faible qu'un éclairage puissant généré par peu de LEDs, ce qui est le cas selon l'invention. Par ailleurs, le dispositif de visualisation d'images du type caméra selon l'invention doit être prévu mobile pour ainsi mieux détecter et cibler la personne dans le sas, qui n'est pas forcément dans un emplacement très précis, ce qui n'est pas le cas du dispositif selon US2001/0022550, où les personnes visualisées sont toujours à un emplacement très précis sur le siège du véhicule et où la caméra est fixé par rapport au miroir. De plus, le problème d'identification d'une personne tel qu'il est décrit dans US2001/0022550 est très différent du problème de détection de l'unicité d'une personne dans un volume donné, tel qu'un sas. En effet, dans un cas, il s'agit de vérifier si la personne à identifier appartient bien à une base de données pré-enregistrée, et dans l'autre cas, il n'y a pas de base de données, toute personne doit pouvoir être traitée, quelque soit sa taille (adulte ou enfant) ou son état (personne handicapée).

Afin d'éliminer des rayons avec une incidence trop grande, il est possible de limiter le champ visuel, par exemple, par un cadre avec une ouverture. Un dispositif de surveillance optique avec un tel cadre est exposé dans le document FR2 737 560. Toutefois, il est impossible dans l'installation selon l'invention de placer un tel cadre sans occulter soit la voie images, soit la voie éclairage, du fait que les moyens d'éclairage sont positionnés près de la caméra et du même côté de la vitre de protection, et du fait également que les LEDs utilisées ont un très large champ supérieur à 110°.

Il est également connu du document US 3 718 751 une installation de surveillance avec un dispositif de visualisation. Toutefois, cette installation présente un agencement de filtres réalisé pour permettre une décomposition de l'image en trois suivant une sélectivité spectrale. L'installation ne présente donc pas de reflets.

Le document WO2007/087931 décrit un dispositif de mesure comprenant une caméra et un miroir dichroïque.

La présente invention a pour but de réaliser une installation de détection de l'unicité d'une personne dans un sas dans laquelle les reflets éblouissants situés en bord de champ générés par la réflexion des moyens d'éclairage sur la vitre de protection sont éliminés sans nécessité de coûts élevés ni un encombrement supplémentaire de l'installation.

Pour ce faire, la présente invention a pour objet une installation de détection de l'unicité d'une personne dans un volume donné comprenant les caractéristiques de la revendication 1.

Ainsi, du fait de l'intégration d'un filtre dichroïque entre le dispositif de visualisation et la vitre de protection, les reflets sur la vitre sont supprimés car ils ont une incidence trop grande, le filtre dichroïque étant utilisé alors comme un moyen de filtrage angulaire et non comme un moyen de filtrage spectral.

De manière avantageuse, le filtre dichroïque est interposé entre les moyens d'éclairage et le dispositif de visualisation d'images.

Selon une forme de réalisation avantageuse, le filtre passe haut par absorption est prévu intégré dans le dispositif de visualisation d'images.

Afin de limiter l'encombrement global de l'installation selon l'invention, le filtre passe haut par absorption est solidarisé sur la vitre de protection.

Afin de faciliter la détection du contour d'une personne passant dans la zone visualisée, l'axe optique pointe vers une paroi présentant une pluralité de points de repères, préférentiellement sous forme de catadioptres.

Afin de capter une image plus précise sur le haut des personnes tout en ayant l'image de la personne complète, l'axe optique est incliné de manière descendante.

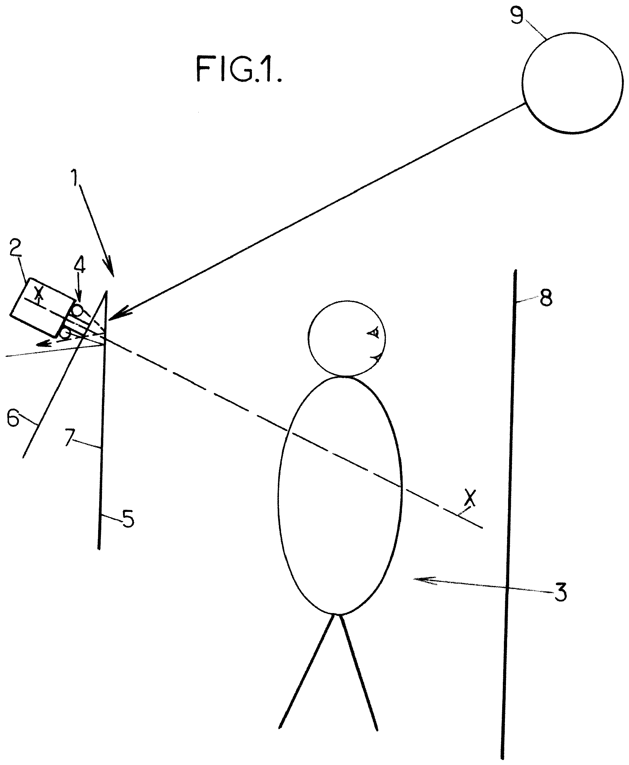

La présente invention est maintenant décrite à l'aide d'un exemple uniquement illustratif et nullement limitatif de la portée de l'invention et à partir de l'illustration ci-jointe dans laquelle la figure 1 représente une vue schématique simplifiée d'une installation de détection selon l'invention.

L'installation de détection 1 selon l'invention comprend un dispositif de visualisation d'images 2, du type caméra vidéo, dirigé, définissant un axe optique X-X dirigé vers une zone visualisée 3.

Afin de permettre la bonne visualisation de la zone visualisée 3, des moyens d'éclairage 4, de type connus en soi, sont prévus dirigés vers la zone visualisée 3.

Selon un mode de réalisation préférentiel, les moyens d'éclairage 4 sont des moyens par éclairage infrarouge, préférentiellement à l'aide de LEDs (ou diodes électroluminescentes), et sont prévus entourant de manière annulaire le dispositif de visualisation d'images 2, permettant ainsi d'obtenir un éclairage le plus homogène possible.

Une vitre de protection 5 est prévue interposée entre, d'un côté, le dispositif de visualisation 2 et les moyens d'éclairage 4 et, de l'autre côté, la zone visualisée 3.

La vitre de protection 5 peut être une simple paroi en verre transparent, mais peut également être une vitre présentant une fonction mécanique, telle qu'une vitre blindée, ou une vitre traitée optiquement. De manière préférentielle, la vitre de protection 5 est une vitre de protection fumée absorbant la lumière visible.

De manière préférentielle, le dispositif de visualisation 2 comprend un objectif (non représenté sur la figure mais de type connu en soi, présentant par exemple un diamètre de six centimètres) autour duquel sont placés les moyens d'éclairage 4. Les moyens d'éclairage 4 sont donc positionnés autour de l'axe optique X-X. Préférentiellement, les moyens d'éclairage 4 sont des LEDs infrarouges puissantes possédant un large champ, c'est-à-dire un champ d'au moins 110°, préférentiellement d'au moins 120°. Du fait de la forte puissance des LEDs, il est uniquement prévu de positionner entre trois et huit LEDs autour de l'objectif du dispositif de visualisation 2.

Du fait que le dispositif de visualisation 2 présente une cinématique, c'est-à-dire qu'il est mobile par rapport à la vitre de protection 5, l'objectif est prévu à au moins quelque centimètres de distance de la vitre 5, préférentiellement à une distance d'au moins 1 cm, et de manière encore plus préférentielle à une distance d'au moins 2 cm.

La zone visualisée 3 se trouve à au moins un mètre de l'objectif du dispositif de visualisation 2, préférentiellement à au moins 1.20m de l'objectif.

Afin de supprimer les reflets infrarouges dans l'image du dispositif de visualisation 2, un filtre dichroïque 6, par exemple du type à couches multiples, est prévu sensiblement perpendiculaire à l'axe optique X-X du dispositif de visualisation 2 entre le dispositif de visualisation 2 et la vitre de protection 5. Le filtre dichroïque 6 est typiquement un filtre passe-bas.

Par ailleurs, un filtre passe haut par absorption 7 est également placé sur la trajectoire de l'axe optique X-X.

Selon l'invention, du fait de l'intégration avantageuse d'un filtre dichroïque entre le dispositif de visualisation 2 et la vitre de protection 5, les reflets sur la vitre 5 sont supprimés car ils ont une incidence trop grande, le filtre dichroïque 6 étant utilisé alors comme un moyen de filtrage angulaire et non un moyen de filtrage spectral.

Le filtre dichroïque 6 peut être placé entre l'objectif du dispositif de visualisation d'images 2 et les moyens d'éclairage 4.

Le filtre dichroïque 6 est prévu mobile avec le dispositif de visualisation 2 par rapport à la vitre de protection 5, ce grâce à quoi les reflets générés par les LEDs 4 sur la vitre de protection 5 sont filtrés sélectivement angulairement.

Bien que selon le mode de réalisation préférentiel et illustré sur la figure 1, le filtre passe haut par absorption 7 soit également interposé entre le filtre dichroïque 6 et la zone visualisée 3, il est également possible que le filtre passe haut 7 soit prévu directement intégré dans le dispositif de visualisation d'images 2.

Préférentiellement, le filtre passe haut par absorption 7 est solidarisé sur la vitre de protection 5, selon tout moyen possible sur la vitre de protection 5, par exemple par collage, vissage ou clipsage.

L'installation de détection 1 s'applique préférentiellement pour permettre la réalisation d'un procédé de détection de l'unicité d'une personne dans un volume donné, par exemple dans un sas ne pouvant accepter qu'une seule personne à la fois. Pour faciliter cette détection, la caméra vidéo 2 est dirigée vers une paroi 8 sur laquelle est placée une pluralité de points de repères sous forme de catadioptres, de type connu en soi, permettant de réfléchir le faisceau lumineux, issu des moyens d'éclairage 4, exactement dans la direction d'où il provient, quelque soit l'angle d'incidence. La détermination du profil d'une personne passant devant cette paroi 8 à catadioptres s'en trouve alors facilitée. Afin de faciliter de manière supplémentaire la détection de la personne passant devant la paroi 8 à repères, la paroi 8 est à fond noir et les points de repère sont à motif clair.

De manière à améliorer le phénomène de détection et de reconnaissance automatique d'une personne dans le sas, l'axe optique X-X est avantageusement incliné de manière descendante.

De plus, l'installation selon l'invention permet également d'éliminer les rayonnements provenant de sources extérieures 9 de lumière, telles que l'éclairage ambiant ou le soleil.

Ainsi, la combinaison d'un filtre dichroïque 6 et d'un filtre passe haut 7 permet d'obtenir la réalisation d'un filtre sélectif en incidence.

En effet, le filtre dichroïque 6 est paramétré de manière telle que sa transmission spectrale dépend de l'angle d'incidence α, angle défini entre l'axe optique X-X de la caméra 2, à savoir l'axe optique X-X définissant la direction de visualisation, et l'axe selon lequel la lumière arrive d'une source sur ce filtre.

Ainsi, à l'aide de l'installation selon l'invention, à l'incidence normale, il est obtenu un filtre passe bande d'une certaine largeur. Quand l'incidence augmente, c'est-à-dire quand la valeur α augmente, la largeur spectrale diminue jusqu'à arriver à une valeur limite au-delà de laquelle il y a extinction.

On obtient ainsi selon l'invention une installation de détection de l'unicité d'une personne avec un filtre passe-bande des rayons lumineux permettant de réduire, voire de supprimer, tous les rayonnements parasites (tels que les reflets de l'éclairage 4 et l'éclairage extérieur) susceptibles d'influer sur la qualité de l'image visualisée par la caméra vidéo et donc susceptibles d'empêcher la bonne détection de l'unicité d'une personne passant un par un dans le champ de la caméra vidéo dans un volume fermé donné.

## Revendications

1. Installation comprenant des moyens de détection de l'unicité d'une personne dans un volume donné permettant de vérifier qu'une seule personne passe à la fois dans ledit volume par reconnaissance optique du contour de la personne, l'installation comprenant :
- un dispositif de visualisation d'images (2), du type caméra vidéo, comprenant un objectif dont l'axe optique (X-X) est dirigé vers une zone visualisée (3);
- des moyens d'éclairage (4) dirigés vers ladite zone visualisée (3) sous la forme de LEDs possédant un large champ d'au moins 110° et positionnés autour de l'objectif du dispositif de visualisation d'images (2) ;
- une vitre de protection (5) interposée entre, d'un côté, ledit dispositif de visualisation (2) et lesdits moyens d'éclairage (4) et, de l'autre côté, ladite zone visualisée (3), ladite vitre de protection (5) étant éloignée de l'objectif du dispositif de visualisation d'images (2) d'une distance d'au moins 1 cm ;
**caractérisée en ce qu'**elle comprend :
- ledit volume en forme de sas constitué par ladite vitre de protection (5) et une paroi (8), laquelle paroi (8) présente une pluralité de points de repères sur lesquels pointe ledit axe optique (X-X) ;
- un filtre passe haut par absorption (7) placé sur la trajectoire dudit axe optique (X-X) ;
- un filtre dichroïque (6) qui est sensiblement perpendiculaire à l'axe optique (X-X) dudit dispositif de visualisation (2) et qui est interposé entre le dispositif de visualisation d'images (2) et ladite vitre de protection (5), ledit filtre dichroïque (6) étant prévu mobile avec ledit dispositif de visualisation (2) par rapport à la vitre de protection (5), ce grâce à quoi les reflets de l'éclairage infrarouge générés par les LEDs (4) sur la vitre de protection (5) sont filtrés sélectivement et angulairement.

2. Installation selon la revendication 1, **caractérisé en ce que** le filtre dichroïque (6) est interposé entre lesdits moyens d'éclairage (4) et ledit dispositif de visualisation d'images (2).

3. Installation selon la revendication 1 ou 2, **caractérisée en ce que** le filtre passe haut par absorption (7) est prévu pour être intégré dans le dispositif de visualisation d'images (2).

4. Installation selon la revendication 1 ou 2, **caractérisée en ce que** le filtre passe haut par absorption (7) est solidarisé sur la vitre de protection (5).

5. Installation selon l'une quelconque des revendications 1 à 4, **caractérisée en ce que** la paroi (8) comporte la pluralité de points de repères sous forme de catadioptres.

6. Installation selon l'une quelconque des revendications 1 à 5, **caractérisée en ce que** la paroi (8) est à fond noir et les points de repère sont à motifs clairs.

7. Installation selon l'une quelconque des revendications 1 à 6, **caractérisée en ce que** l'axe optique (X-X) est incliné de manière descendante.

## Patentansprüche

1. Anlage, die Mittel zur Erkennung der Einmaligkeit einer Person in einem bestimmten Volumen aufweist, die es erlauben über optische Erkennung der Kontur der Person zu überprüfen, dass nur jeweils eine Person das Volumen passiert, wobei die Anlage Folgendes aufweist:
- eine Bildanzeigevorrichtung (2) des Typs Videokamera, die ein Objektiv aufweist, dessen optische Achse (X-X) auf einen Betrachtungsbereich (3) gerichtet ist;
- auf den Betrachtungsbereich (3) gerichtete Beleuchtungsmittel (4) in Form von LEDs, die ein großes Feld von mindestens 110° aufweisen und um das Objektiv der Bildanzeigevorrichtung (2) herum angeordnet sind;
- eine Schutzscheibe (5), die zwischen der Anzeigevorrichtung (2) und den Beleuchtungsmitteln (4) einerseits und dem Betrachtungsbereich (3) andererseits angeordnet ist, wobei die Schutzscheibe (5) mindestens 1 cm vom Objektiv der Bildanzeigevorrichtung (2) entfernt angeordnet ist;
**dadurch gekennzeichnet, dass** sie Folgendes aufweist:
- das Volumen in Form einer Schleuse, bestehend aus der Schutzscheibe (5) und einer Wand (8), wobei die Wand (8) eine Vielzahl von Bezugspunkten aufweist, auf die die optische Achse (X-X) zeigt;
- einen Absorptions-Hochpassfilter (7), der auf dem Weg der optischen Achse (X-X) platziert ist;
- einen dichroitischen Filter (6), der sich im Wesentlichen senkrecht zur optischen Achse (X-X) der Anzeigevorrichtung (2) befindet und zwischen der Bildanzeigevorrichtung (2) und der Schutzscheibe (5) angeordnet ist, wobei der dichroitische Filter (6) beweglich mit der Anzeigevorrichtung (2) im Verhältnis zur Schutzscheibe (5) vorgesehen ist, wodurch die Reflexe der von den LEDs (4) erzeugten Infrarotbeleuchtung auf der Schutzscheibe (5) selektiv und winkelabhängig gefiltert werden.

2. Anlage nach Anspruch 1, **dadurch gekennzeichnet, dass** der dichroitische Filter (6) zwischen den Beleuchtungsmitteln (4) und der Bildanzeigevorrichtung (2) angeordnet ist.

3. Anlage nach Anspruch 1 oder 2, **dadurch gekennzeichnet, dass** der Absorptions-Hochpassfilter (7) vorgesehen ist, um in die Bildanzeigevorrichtung (2) integriert zu werden.

4. Anlage nach Anspruch 1 oder 2, **dadurch gekennzeichnet, dass** der Absorptions-Hochpassfilter (7) auf der Schutzscheibe (5) befestigt ist.

5. Anlage nach einem der Ansprüche 1 bis 4, **dadurch gekennzeichnet, dass** die Wand (8) die Vielzahl von Bezugspunkten als Rückstrahler aufweist.

6. Anlage nach einem der Ansprüche 1 bis 5,
**dadurch gekennzeichnet, dass** die Wand (8) einen schwarzen Hintergrund aufweist und die Bezugspunkte helle Muster darstellen.

7. Anlage nach einem der Ansprüche 1 bis 6, **dadurch gekennzeichnet, dass** die optische Achse (X-X) nach unten geneigt ist.

## Claims

1. Equipment comprising means for detecting the uniqueness of a person in a given volume in order to check that only one person at a time enters said volume by the optical recognition of the outline of the person, the equipment comprising:
- an image viewing device (2), of the video camera type, comprising a lens, the optical axis (X-X) whereof is directed towards a viewed area (3);
- lighting means (4) directed towards said viewed area (3) in the form of LEDs having a wide range of at least 110° and positioned around the lens of the image viewing device (2);
- a protective glass (5) inserted between, on the one side, said viewing device (2) and said lighting means (4) and, on the other side, said viewing area (3), said protective glass (5) being remote from the lens of the image viewing device (2) at a distance of at least 1 cm;
**characterised in that** it comprises:
- said volume in the form of an airlock formed by said protective glass (5) and a wall (8), which wall (8) has a plurality of reference points to which said optical axis (X-X) points;
- a high-pass absorption filter (7) placed on the trajectory of said optical axis (X-X);
- a dichroic filter (6) which is substantially perpendicular to the optical axis (X-X) of said viewing device (2) and which is inserted between the image viewing device (2) and said protective glass (5), said dichroic filter (6) being intended to be capable of moving together with said viewing device (2) relative to the protective glass (5), whereby the reflections of the infrared lighting generated by the LEDs (4) on the protective glass (5) are selectively and angularly filtered.

2. Equipment according to claim 1, **characterised in that** the dichroic filter (6) is inserted between said lighting means (4) and said image viewing device (2).

3. Equipment according to claim 1 or 2, **characterised in that** the high-pass absorption filter (7) is intended to be integrated into the image viewing device (2).

4. Equipment according to claim 1 or 2, **characterised in that** the high-pass absorption filter (7) is rigidly connected to the protective glass (5).

5. Equipment according to any one of claims 1 to 4, **characterised in that** the wall (8) includes the plurality of reference points in the form of reflectors.

6. Equipment according to any one of claims 1 to 5, **characterised in that** the wall (8) has a black bottom and the reference points have light-coloured patterns.

7. Equipment according to any one of claims 1 to 6, **characterised in that** the optical axis (X-X) is inclined in a downwards manner.
